# EUROPEAN PATENT APPLICATION

(11) **EP 4 769 690 A1**
(43) Date of publication of application: **01.07.2026**
(21) Application number: 25774788.1
(22) Date of filing: 18.03.2025
(51) Int. Cl.: H01M 50/131, H01M 50/129, H01M 50/124, H01M 50/133, H01M 50/105, H01M 50/121, H01M 50/119, B32B 15/09, B32B 15/088, B32B 15/085

(54) **POUCH FILM LAMINATE, POUCH-TYPE BATTERY CASE, AND POUCH-TYPE SECONDARY BATTERY**

(30) Priority: 18.03.2024 KR 20240037462; 18.03.2024 KR 20240037463; 24.12.2024 KR 20240196382; 17.03.2025 KR 20250034244
(71) Applicant: LG Energy Solution, Ltd., Seoul 07335 (KR)
(72) Inventor: LEE, Wan Soo, Daejeon 34122 (KR); SHIN, Ji Hyun, Daejeon 34122 (KR); SONG, Dae Woong, Daejeon 34122 (KR); KIM, Gi Woung, Daejeon 34122 (KR); YU, Hyung Kyun, Daejeon 34122 (KR)
(74) Representative: Plasseraud IP
(86) International application number: PCT/KR2025/003531
(87) International publication number: WO 2025/198316

(57) **Abstract**

The present invention relates to a pouch film laminate including a substrate layer, a gas barrier layer, and a sealant layer laminated in sequence, wherein the substrate layer includes a polyester-based resin containing an ethylene glycol-derived structure, a butylene glycol-derived structure, and a terephthalic acid-derived structure, and a molar ratio of the ethylene glycol-derived structure: the butylene glycol-derived structure is 95:5 to 80:20.

## Description

### TECHNICAL FIELD

This application claims the benefit of Korean Patent Application Nos. 10-2024-0037462 and 10-2024-0037463, filed on March 18, 2024, 10-2024-0196382, filed on December 24, 2024, and 10-2025-34244, filed on March 17, 2025 in the Korean Intellectual Property Office, the disclosures of which are incorporated herein in its entirety by reference.

The present invention relates to a pouch film laminate and a pouch-type secondary battery, and more particularly, a pouch film laminate with excellent heat resistance and chemical resistance and having improved formability, and a pouch-type battery case and a pouch-type secondary battery.

### BACKGROUND ART

With technological development and increasing demand for an electric vehicle and an energy storage system (ESS), demand for a battery as a source of energy is rapidly increasing, and accordingly, research on a battery satisfying various requirements is being conducted.

For this lithium secondary battery, mainly a lithium-based oxide is used as a positive electrode active material, and a carbon material is used as a negative electrode active material, and in general, depending on the type of an electrolyte to be used, the lithium secondary battery is also classified into a lithium ion battery, a lithium ion polymer battery, and a lithium polymer battery, and depending on the outer shape of the battery, the lithium secondary battery is also classified into a cylindrical, prismatic, and pouch-type secondary batteries. In terms of the shape of the battery, a prismatic secondary battery and pouch-type secondary battery, thin and applicable to products such as a mobile phone, are highly demanded.

Among these, attention is being focused on the pouch-type secondary battery which has no limitation in shape and size, and is easily assembled by heat fusion, and adequate for manufacturing of a light-weighted and thin cell in particular due to effect of easy discharge of gas or liquid in case of abnormal behaviors.

A pouch-type battery case is prepared in a way that a press processing is performed on a pouch film laminate having flexibility to form a cup part. Then, once the cup part is formed, an electrode assembly is accommodated in an accommodating space of the cup part, and a sealing part is sealed to prepare the secondary battery.

In this press processing, drawing is performed by inserting a pouch film into a press equipment, and applying pressure to the pouch film laminate by a punch to stretch out the pouch film laminate. The pouch film laminate is generally formed of multiple layers in which a polymer film, such as polyethylene terephthalate, etc., is laminated on one side of a gas barrier layer of a metal material, and a sealant layer is laminated on the other side.

Due to recent increase of demand for a high-capacity battery such as a battery for an electric vehicle or an ESS battery, technology for increasing energy density by increasing the amount of a cell material per one pouch has been demanded. Technology for increasing the thickness of aluminum in a gas barrier layer was developed in order to improve formability and robustness of a pouch, which is an exterior material, in response to the increased weight and amount of the cell, but there were limitations, and there was a problem of decreasing the overall energy density per volume.

### DISCLOSURE OF THE INVENTION

### TECHNICAL PROBLEM

A task of the present invention is to provide a pouch film laminate capable of exhibiting ultra-high formability by increasing elongation while maintaining corrosion resistance and insulation against external environment of a substrate layer.

Another task of the present invention is to provide a pouch-type battery case prepared by forming the pouch film laminate.

Another task of the present invention is to provide a lithium secondary battery including the pouch-type battery case.

### TECHNICAL SOLUTION

To solve the above tasks, the present invention provides a pouch film laminate, a pouch-type battery case, and a lithium secondary battery.
[1] The present invention provides a pouch film laminate in which a substrate layer, a gas barrier layer, and a sealant layer are laminated in sequence, wherein the substrate layer includes a polyester-based resin containing an ethylene glycol-derived structure, a butylene glycol-derived structure, and a terephthalic acid-derived structure, and a molar ratio of the ethylene glycol-derived structure: the butylene glycol-derived structure is 95:5 to 80:20.
[2] The present invention provides the pouch film laminate of [1] above, wherein the substrate layer includes a surface protection layer and a stretching assist layer, the surface protection layer includes the polyester-based resin, and the stretching assist layer includes a polyamide-based resin.
[3] The present invention provides the pouch film laminate of [2] above, wherein the surface protection layer has a thickness of 20 µm to 30 µm.
[4] The present invention provides the pouch film laminate of any one or more of [2] and [3] above, wherein a ratio of a total thickness of the pouch film laminate to a thickness of the surface protection layer is 5 to 10.
[5] The present invention provides the pouch film laminate of any one or more of [2] to [4] above, wherein the stretching assist layer has a thickness of 20 µm to 30 µm.
[6] The present invention provides the pouch film laminate of any one or more of [2] to [5] above, wherein a ratio of a thickness of the stretching assist layer to a thickness of the surface protection layer is 1.2 or less.
[7] The present invention provides the pouch film laminate of any one or more of [1] to [6] above, wherein the gas barrier layer has a thickness of 60 µm to 130 µm.
[8] The present invention provides the pouch film laminate of any one or more of [1] to [7] above, wherein the gas barrier layer has a thickness of 70 µm to 90 µm.
[9] The present invention provides the pouch film laminate of any one or more of [2] to [8] above, wherein a ratio of a thickness of the gas barrier layer to a thickness of the surface protection layer is 2.5 to 3.3.
[10] The present invention provides the pouch film laminate of any one or more of [1] to [9] above, wherein a total thickness of the pouch film laminate is 160 µm to 280 µm.
[11] The present invention provides the pouch film laminate of any one or more of [1] to [10] above, wherein the sealant layer includes a second polymer containing polypropylene (PP).
[12] The present invention provides the pouch film laminate of any one or more of [1] to [11] above, wherein the sealant layer includes a first sealant layer, a second sealant layer, and a third sealant layer laminated in sequence.
[13] The present invention provides the pouch film laminate of any one or more of [1] to [12] above, wherein a molar ratio of the ethylene glycol-derived structure: the butylene glycol-derived structure is 1:0.100 to 1:0.220.
[14] The present invention provides the pouch film laminate of any one or more of [1] to [13] above, wherein the polyester-based resin includes a condensation polymerization reaction product of a mixture of ethylene glycol and butylene glycol, and one or more selected from the group consisting of dimethyl terephthalate and terephthalic acid.
[15] The present invention provides the pouch film laminate of any one or more of [1] to [14] above, wherein the gas barrier layer includes one or more selected from the group consisting of aluminum, copper, stainless steel, nickel, titanium, and INVAR.
[16] The present invention provides a pouch-type battery case, manufactured by drawing-forming the pouch film laminate of any one or more of [1] to [15] above.
[17] The present invention provides a pouch-type secondary battery including the pouch-type battery case according to [16] above; and an electrode assembly accommodated in the pouch-type battery case.

### ADVANTAGEOUS EFFECTS

Since the pouch film laminate according to the present invention includes a modified polyethylene terephthalate polyester-based resin, instead of polyethylene terephthalate which is generally used in a substrate layer of a conventional pouch film laminate, the pouch film laminate may have improved stretching property, while maintaining corrosion resistance and insulation against external environment, thereby exhibiting ultra-high formability, and therefore, the pouch film laminate may be useful in preparation of a pouch-type lithium secondary battery with improved pouch appearance defects.

### BRIEF DESCRIPTION OF THE DRAWINGS

The drawings accompanied in the specification illustrates preferred embodiments of the present invention, and serve to better understand the technical idea of the present invention together with the content of the present invention previously described, and therefore, the present invention is not to be construed as limited to only the matters described in the drawings.
FIG. 1 is a cross-sectional view of a pouch film laminate according to an embodiment of the present invention.
FIG. 2 is an exploded diagram of a pouch-type secondary battery according to an embodiment of the present invention.

### MODE FOR CARRYING OUT THE INVENTION

The advantages and features of the present invention and methods of achieving them may become clear by referring to the embodiments described in detail below with the accompanying drawings. The present invention, however, is not limited to the embodiments disclosed below, but may be implemented in various different forms, the present embodiments are merely provided to ensure that the disclosure of the present invention is complete and to fully inform those of ordinary skill in the art to which the present invention pertains, and the present invention is only defined by the scope of the claims. Like reference symbols or numerals refer to the same components throughout the specification.

Unless otherwise defined, all terms (including technical and scientific terms) used in this specification may be used with meanings that can be commonly understood by those skilled in the art to which the present invention belongs. Also, terms defined in commonly used dictionaries are not to be interpreted ideally or excessively unless clearly specifically defined.

The terminology used herein is for describing embodiments and is not intended to limit the present invention. In this specification, the singular forms are intended to include the plural forms as well, unless the context clearly indicates otherwise. The terms "comprises" and/or "comprising" used in this specification do not exclude the presence or addition of one or more other components other than the components stated.

In this specification, when a part includes a component, this does not mean that other components are excluded, but that it may further include other components unless specifically stated to the contrary.

In this specification, the term "A and/or B" means A or B, or A and B.

In this specification, "%" refers to wt% unless indicated otherwise.

### Pouch Film Laminate

A pouch film laminate according to the present invention is a pouch film laminate in which a substrate layer, a gas barrier layer, and a sealant layer are laminated in sequence, wherein the substrate layer includes a polyester-based resin containing an ethylene glycol-derived structure, a butylene glycol-derived structure, and a terephthalic acid-derived structure, and a molar ratio of the ethylene glycol-derived structure: the butylene glycol-derived structure is 95:5 to 80:20.

In order to improve energy density by increasing the amount of a cell material accommodated in the pouch-type battery case, an accommodating space of the pouch-type battery case needs to be increased, and for this, the depth of a cup part of the pouch-type battery case needs to be increased. In order to increase the depth of the cup part of the pouch-type battery case, the thickness of the gas barrier layer was increased to maintain barrier property, but in case that formability of the substrate layer is relatively low, cracks may occur on the outer part of the pouch-type battery case.

By including a polyester-based resin containing a polyethylene glycol-derived structure, a butylene glycol-derived structure, and a terephthalic acid-derived structure with improved elongation, instead of polyethylene terephthalate which used to be included in a substrate layer of a conventional general pouch film laminate, the pouch film laminate according to the present invention may exhibit ultra-high formability. Accordingly, even in case of increasing the thickness of the substrate layer, excellent formability may be exhibited, so that despite increased forming depth of the pouch film laminate, protection effect and insulation, which the substrate layer provides, may be maintained without occurrence of cracks.

### Substrate layer

The substrate layer is formed on the outermost layer of the pouch film laminate to protect a secondary battery from external friction and collision. The substrate layer may be made of a polymer, and may thus electrically insulate an electrode assembly from the outside.

The substrate layer may include a polyester-based resin containing an ethylene glycol-derived structure, a butylene glycol-derived structure, and a terephthalic-acid derived structure, and the polyester-based resin may include an ethylene terephthalate structure and a butylene terephthalate structure in its main chain.

Polyethylene terephthalate (PET) is excellent in chemical resistance and insulation, but has relatively low elongation, limiting the formability of the pouch film laminate. In comparison, polybutylene terephthalate (PBT) has high elongation, but is low in chemical resistance and heat resistance, compared to polyethylene terephthalate, and thus is difficult to be applied alone to the substrate layer. In comparison, since the substrate layer of the pouch film laminate of the present invention includes the polyester-based resin containing an ethylene terephthalate structure and a butylene terephthalate structure in its main chain, characteristics of polyethylene terephthalate and characteristics of polybutylene terephthalate may be appropriately exhibited in combination, so that improved formability may be exhibited while excellent chemical resistance, insulation, and the like are maintained.

According to an embodiment of the present invention, a molar ratio of the ethylene terephthalate structure and the butylene terephthalate structure, included in the polyester-based resin, may be 95:5 to 80:20, particularly 90:10 to 80:20, and more particularly 90.9 :9.1 to 82.0:18.

The molar ratio of the ethylene terephthalate structure and the butylene terephthalate structure included in the polyester-based resin may be a molar ratio of the ethylene terephthalate structure and the butylene terephthalate structure included in a remaining structure excluding the terephthalic acid-derived structure included in the polyester-based resin.

When the ethylene terephthalate structure and the butylene terephthalate structure are included in the polyester-based resin in the above molar ratio, elongation of the substrate layer may increase and the formability of the pouch film laminate may be improved, and also, the heat resistance and chemical resistance of the pouch film laminate may be maintained. When the proportion of the butylene terephthalate structure is less than the above range, appropriate improvement effect on formability may not be expected, and when the proportion of the butylene terephthalate structure is greater than the above range, formability may increase, but the heat resistance and chemical resistance of the pouch film laminate may not be maintained.

In an embodiment of the present invention, the molar ratio of the ethylene terephthalate structure and the butylene terephthalate structure, included in the polyester-based resin, may be 1:0.100 to 1:0.220, particularly 1:0.105 to 1:0.210, and more particularly 1:0.110 to 1:0.200 when the number of moles of the ethylene terephthalate structure included in the polyester-based resin is 1. When the ethylene terephthalate structure and the butylene terephthalate structure are included in the polyester-based resin in the above molar ratio, elongation of the substrate layer may increase and the formability of the pouch film laminate may be improved, and also, heat resistance and chemical resistance of the pouch film laminate may be maintained. When the proportion of the butylene terephthalate structure is less than the above range, appropriate improvement effect on the formability may not be expected, and when the proportion of the butylene terephthalate structure is higher than the above range, formability may increase, but the heat resistance and chemical resistance of the pouch film laminate may not be maintained.

A preparation method for the polyester-based resin is not particularly limited, and the polyester-based resin may be prepared in a method known in the relevant art, for example, a terephthalic acid (TPA) method by reaction of a mixture of ethylene glycol and butylene glycol with terephthalic acid, or a dimethyl terephthalate (DMT) method by a mixture of ethylene glycol and butylene glycol and dimethyl terephthalate.

According to an embodiment of the present invention, the polyester-based resin may be a result product of, for example, esterification reaction and condensation polymerization reaction between the mixture of ethylene glycol and butylene glycol and at least one selected from the group consisting of dimethyl terephthalate and terephthalic acid.

The substrate layer may have a thickness of 40 µm to 60 µm, particularly of 42 µm to 58 µm, and more particularly of 45 µm to 55 µm. When the thickness of the substrate layer falls within the above ranges, external insulation may be excellent, and since the total thickness of the pouch is not large, energy density per volume of a secondary battery may be excellent.

The substrate layer may have a single-layer structure made of any one material. On the contrary, the substrate layer may also have a multi-layer structure including two or more materials for respective layers.

According to an embodiment of the present invention, the substrate layer may include a surface protection layer and a stretching assist layer. The surface protection layer may be a layer disposed on the outermost layer of the pouch film laminate, for example, a surface protection film, and the stretching assist layer may be a layer disposed between the surface protection film and the gas barrier layer, for example, a stretching assist film. The surface protection layer and the stretching assist layer may include materials of different quality and/or properties. An interface may be present between the surface protection layer and the stretching assist layer. This means that the surface protection layer and the stretching assist layer are different layers from each other, and may be formed separately from each other.

In an embodiment of the present invention, when the substrate layer includes a surface protection film and a stretching assist film, the polyester-based resin containing an ethylene glycol-derived structure, a butylene glycol-derived structure, and a terephthalic acid-derived structure, previously described, may be included in the surface protection film.

The surface protection layer may have a thickness of 20 µm to 30 µm, particularly of 22 µm to 28 µm, and more particularly of 24 µm to 26 µm. The thickness of the surface protection layer may be increased, compared to the thickness of the surface protection layer included in a pouch film laminate for a conventional general pouch-type battery case, and when the thickness of the surface protection layer falls within the above numerical ranges, even if the forming depth of the pouch film laminate is increased, moisture permeation into the pouch film laminate may be effectively suppressed while insulation and formability of the pouch are stably secured. In addition, by making the total thickness of the pouch film laminate thin, excellent energy density per volume of a secondary battery may be achieved.

In an embodiment of the present invention, a ratio of the total thickness of the pouch film laminate to the thickness of the surface protection layer may be 5 to 10, particularly 6 to 10, 6 to 9, 7 to 10, or 7 to 9, and more particularly, 8 to 9. The pouch film laminate according to an embodiment of the present invention may include the gas barrier layer and the surface protection layer with increased thicknesses to have the increased forming depth, and the thickness of the surface protection layer and the total thickness of the pouch film laminate satisfy the above ratios. In comparison, the conventional general pouch film laminate has a limitation in increasing its upper limit of the thickness due to low elongation of polyethylene terephthalate included in the surface protection layer, so that the small thickness of the surface protection layer fails to satisfy the above ratio.

The surface protection layer may include an additive. By including the additive in the surface protection layer, property of the surface protection layer may be changed. For example, as an additive for controlling tensile strength of the surface protection layer, at least one of a carbon fiber, a glass fiber, or an aramid fiber may be added.

The stretching assist layer may be a layer disposed between the surface protection layer and the gas barrier layer. In this case, the stretching assist layer may perform a role in improving formability of the pouch film laminate.

The stretching assist layer may include a polyamide-based resin, and for example, include a polyamide-based film. The stretching assist layer may include at least one selected from the group consisting of nylon 6,6, nylon MXD6 (polyxylylene adipamide), nylon 4, nylon 4,6, and nylon 4,10, but is not limited thereto. In particular, the stretching assist layer may include nylon 6,6 and/or nylon MXD6 in order to have a melting temperature of 240 °C or higher.

The stretching assist layer may have a thickness of 20 µm to 30 µm, particularly of 22 µm to 28 µm, and more particularly of 24 µm to 26 µm. When the thickness of the stretching assist layer falls within the above numerical ranges, reduction in energy density per volume of the secondary battery, due to excessively increasing thickness of the pouch film laminate, may be prevented, while the formability of a pouch is secured.

In an embodiment of the present invention, a ratio of the thickness of the stretching assist layer to the thickness of the surface protection layer may be 1.2 or less, particularly, 0.5 to 1.2, 0.6 to 1.2, 0.7 to 1.2, 0.8 to 1.2, 0.6 to 1.1, 0.7 to 1.1, or 0.8 to 1.1, and more particularly, 0.9 to 1.1. Since the pouch film laminate according to an embodiment of the present invention includes a polyester-based resin having high elongation as a surface protection layer, even if the ratio of the thickness of the stretching assist layer to the thickness of the surface protection layer is reduced, the pouch film laminate may exhibit excellent formability. In comparison, in the conventional general pouch film laminate, since difference in elongation between the stretching assist layer and the gas barrier layer needs to be reduced by relatively increasing the thickness of the stretching assist layer in order to supplement low elongation of polyethylene terephthalate included in the surface protection layer, the thickness of the stretching assist layer becomes large, failing to satisfy the above ratio.

In an embodiment of the present invention, in case that an interface is present between the surface protection layer and the stretching assist layer, a first adhesive layer may be disposed on the interface. For example, in case that the substrate layer according to an embodiment of the present invention includes the first adhesive layer, the stretching assist layer, the first adhesive layer, and the surface protection layer may be laminated in sequence.

The first adhesive layer may have a thickness of 1 µm to 10 µm, particularly of 2 µm to 8 µm, and more particularly of 2 µm to 5 µm. When the thickness of the first adhesive layer falls within the above thickness ranges, the reduction in energy density per volume of the secondary battery, due to excessively increasing thickness of the pouch film laminate, may be prevented, while sufficient adhesion may be secured between the surface protection layer and the stretching assist layer.

The first adhesive layer may include at least one selected from the group consisting of a urethane-based polymer, an epoxy-based polymer, and an acrylate-based polymer, and is not limited thereto In an embodiment of the present invention, the first adhesive layer may include a urethane-based polymer, and in this case, the surface protection layer and the stretching assist layer may be sufficiently bonded by the first adhesive layer, and forming and cutting are also easy.

### Gas Barrier Layer

The gas barrier layer is laminated between the substrate layer and the sealant layer to secure mechanical strength of a pouch, and block access of gas or moisture from the outside of a secondary battery, and to prevent electrolyte leakage from the inside of the pouch-type case.

The gas barrier layer may be made of a metal. For example, the gas barrier layer may be a metal thin film including one or more metals selected from the group consisting of aluminum (Al), copper (Cu), stainless steel (SUS), nickel (Ni), titanium (Ti), and INVAR, but is not limited thereto.

The gas barrier layer may be made of an aluminum alloy thin film. In case of forming the gas barrier layer using the aluminum alloy thin film, the gas barrier layer may be light-weighted while the mechanical strength exceeding a certain level is secured, and supplementation for electrochemical property related to an electrode assembly and an electrolyte, heat dissipation, and the like may be secured. The aluminum alloy thin film may include an element other than aluminum (Al). For example, the aluminum alloy thin film may include one or more selected from the group consisting of iron (Fe), copper (Cu), chrome (Cr), manganese (Mn), nickel (Ni), magnesium (Mg), silicon (Si), and zinc (Zn).

The gas barrier layer may have a thickness of 60 µm to 130 µm, particularly 60 µm to 120 µm, 70 µm to 120 µm, 70 µm to 110 µm, or 70 µm to 100 µm, and more particularly 70 µm to 90 µm. The thickness of the gas barrier layer is larger than the thickness of the gas barrier layer included in a conventional general pouch film laminate, and when the thickness of the gas barrier layer falls within the above ranges, excellent gas barrier performance may be exhibited while improved formability is exhibited during forming of a cup part of a pouch-type battery case using the pouch film laminate.

In an embodiment of the present invention, a ratio of the thickness of the gas barrier layer to the thickness of the surface protection layer, which may be included in the substrate layer, may be 2.5 to 3.3, particularly, 2.6 to 3.3, 2.7 to 3.3, 2.8 to 3.3, 2.9 to 3.3, 3.0 to 3.3, 2.80 to 3.25, 2.90 to 3.25, 3.00 to 3.25, or 3.05 to 3.25, and more particularly, 3.10 to 3.25. The pouch film laminate according to an embodiment of the present inventive may include the surface protection layer and the gas barrier layer in the respective ranges previously described, the thicknesses of which may be increased, compared to the respective thicknesses of the surface protection layer and the gas barrier layer included in the conventional general pouch film laminate, and accordingly, the ratio of the thickness of the gas barrier layer to the thickness of the surface protection layer may fall within the above ranges. In the pouch film laminate according to an embodiment of the present invention, since the ratio of the thickness of the gas barrier layer to the thickness of the surface protection layer falls within the above ranges, the surface protection layer and the gas barrier layer may exhibit appropriately improved elongation in combination, thereby exhibiting excellent formability of the pouch film laminate.

In an embodiment of the present invention, a second adhesive layer may be disposed between the gas barrier layer and the substrate layer, and when the substrate layer includes the surface protection layer and the stretching assist layer, the second adhesive layer may be disposed between the gas barrier layer and the stretching assist layer. For example, in an embodiment of the present invention, the gas barrier layer, the second adhesive layer, and the stretching assist layer may be laminated in sequence.

The second adhesive layer may have a thickness of 1 µm to 10 µm, particularly of 2 µm to 8 µm, and more particularly of 2 µm to 5 µm. When the thickness of the second adhesive layer falls within the above thickness ranges, the reduction in energy density per volume of the secondary battery, due to excessively increasing thickness of the pouch film laminate, may be prevented while sufficient adhesion between the substrate layer and the gas barrier layer may be secured.

The second adhesive layer may include at least one selected from the group consisting of a urethane-based, epoxy-based, and acrylate-based polymers, and is not limited thereto. In an embodiment of the present invention, the second adhesive layer may include a urethane-based polymer, and in this case, the substrate layer and the gas barrier layer may be sufficiently bonded by the second adhesive layer, and forming and cutting are also easy.

### Sealant Layer

When the pouch-type battery case accommodating an electrode assembly therein is sealed, the sealant layer may be thermally bonded to a sealing part to completely seal the inside the pouch-type battery case. For this, the sealant layer may be made of a material having excellent thermal bonding strength.

Since the sealant layer is a surface to be in contact with an electrolyte and an electrode assembly after the battery case is formed, the sealant layer is required to have insulation and corrosion resistance, and since the inside needs to be completely sealed such that movement of substances needs to be blocked between the inside and outside, high sealing property is required.

The sealant layer may be made of a polymer material, which may be one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon, and particularly, among these, polypropylene (PP), which is excellent in mechanical property such as tensile strength, rigidity, surface hardness, wear resistance, and heat resistance, and excellent chemical property such as corrosion resistance, may be included.

More particularly, the sealant layer may include polypropylene, cast polypropylene (CPP), acid modified polypropylene, a polypropylene-butylene-ethylene copolymer, or a combination thereof.

The sealant layer may have a total thickness of 60 µm to 100 µm, particularly of 60 µm to 90 µm or 60 µm to 80 µm, and more particularly of 70 µm to 90 µm. When the thickness of the sealant layer is too small, sealing durability and insulation may decrease, and when the thickness is too large, flexibility may decrease, and the total thickness of the pouch film laminate may increase, causing reduction in energy density per volume.

The sealant layer may have a single-layer structure, and may also have a multi-layer structure including two or more layers of different polymer materials.

According to an embodiment of the present invention, the sealant layer may include a first sealant layer, a second sealant layer, and a third sealant layer laminated in sequence, and for example, the first sealant layer may be bonded in contact with the gas barrier layer.

In an embodiment of the present invention, the first sealant layer and the third sealant layer may each be independently made of a polymer material, which may be one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon, and particularly, among these, polypropylene (PP), which is excellent in mechanical property such as tensile strength, rigidity, surface hardness, wear resistance, and heat resistance, and excellent chemical property such as corrosion resistance, may be included. More particularly, the first sealant layer and the third sealant layer may each independently include polypropylene, cast polypropylene (CPP), acid modified polypropylene, a polypropylene-butylene-ethylene copolymer, or a combination thereof.

In an embodiment of the present invention, the first sealant layer may have a thickness of 10 µm to 50 µm, particularly 15 µm to 50 µm, or 20 µm to 40 µm, and more particularly 25 µm to 35 µm.

In an embodiment of the present invention, the third sealant layer may have a thickness of 10 µm to 40 µm, particularly 10 µm to 40 µm or 10 µm to 30 µm, and more particularly 15 µm to 30 µm.

In an embodiment of the present invention, the second sealant layer may be included in the sealant layer as a core layer, and the second sealant layer may have a lower elasticity than those of the first sealant layer and the third sealant layer. In case that the second sealant layer, having a relatively low elasticity than the first sealant layer and the third sealant layer, is disposed between the first sealant layer and the third sealant layer, the sealant layer may exhibit improved elongation despite the increased total thickness of the sealant layer.

The second sealant layer may be made of one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon, and particularly, among these, polypropylene (PP), which is excellent in mechanical property such as tensile strength, rigidity, surface hardness, wear resistance, and heat resistance, and excellent chemical property such as corrosion resistance, may be included. More particularly, the second sealant layer may include polypropylene, cast polypropylene (CPP), acid modified polypropylene, a polypropylene-butylene-ethylene copolymer, or a combination thereof.

In an embodiment of the present invention, the second sealant layer may have a thickness of 10 µm to 50 µm, particularly 15 µm to 50 µm or 20 µm to 40 µm, and more particularly 25 µm to 35 µm.

The pouch film laminate according to the present invention as above may be prepared in a preparation method of a pouch film laminate known in the relevant art. For example, the pouch film laminate of the present invention may be prepared through a method in which the substrate layer is attached onto an upper surface of the gas barrier layer though an adhesive, and the sealant layer is formed on a lower surface of the gas barrier layer through coextrusion or an adhesive layer, but the method is not limited thereto.

The pouch film laminate may have a total thickness of 160 µm to 280 µm, particularly, 170 µm to 280 µm, 180 µm to 280 µm, 185 µm to 280 µm, 185 µm to 260 µm, or 190 µm to 260 µm, and more particularly, 200 µm to 250 µm. When the thickness of the pouch film laminate falls within the above ranges, the forming depth may be increased while minimizing reduction of a space for accommodating a battery, decrease in sealing durability, etc., caused by the increase in thickness of the pouch laminate.

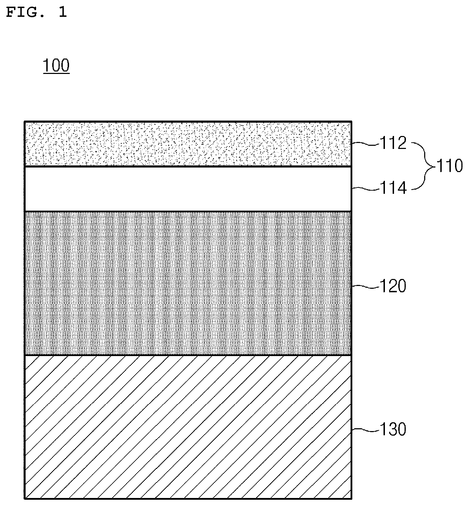

Referring to FIG. 1, each component of the pouch film laminate according to the present invention is described in more detail.

FIG. 1 illustrates a cross-sectional view of a pouch film laminate according to an embodiment of the present invention.

The pouch film laminate 100 according to an embodiment of the present invention may include a substrate layer 110, a gas barrier layer 120, and a sealant layer 130 laminated in sequence, and the substrate layer 110 may include a stretching assist film 114 disposed on the gas barrier layer 120, and a surface protection film 112 disposed on the stretching assist film 114. The surface protection film 112 may be a layer disposed on the outermost layer of the pouch film laminate, and the stretching assist film 114 may be a layer disposed between the surface protection layer 112 and the gas barrier layer 120.

### Pouch-Type Battery Case

The pouch-type battery case according to an embodiment of the present invention may accommodate an electrode assembly therein. The pouch-type battery case may be prepared by forming the pouch film laminate of the present invention, previously described. Since detailed constitution and property of the pouch film laminate are same as previously described, detailed description thereof is omitted.

The pouch film laminate may be drawing-formed and stretched by a punch or the like to manufacture the pouch-type battery case. As a result, the pouch-type battery case may include a cup part and an accommodating part. The accommodating part may be a space for accommodating an electrode assembly, which may refer to an accommodating space formed in the shape of a pouch inside the cup part as the cup part is formed.

### Lithium Secondary Battery

According to another embodiment of the present invention, a lithium secondary battery, including the pouch-type battery case previously described; and an electrode assembly accommodated in the pouch-type battery case, is provided.

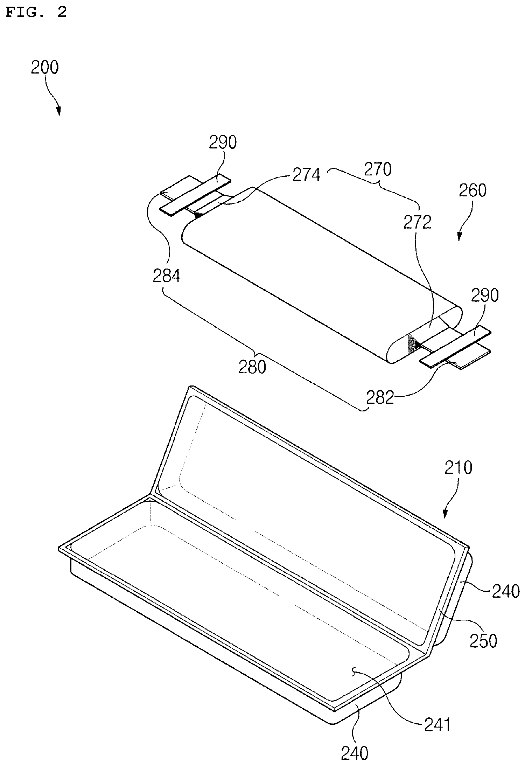

FIG. 2 illustrates an exploded diagram of a lithium secondary battery 200 including an electrode assembly 260 and a pouch-type battery case 210 where the electrode assembly is accommodated.

As illustrated in FIG. 2, the lithium secondary battery 200 according to an embodiment of the present invention may include the pouch-type battery case 210 and the electrode assembly 260 accommodated in the pouch-type battery case 210. The electrode assembly 260 may be formed by a positive electrode, a separator, and a negative electrode being stacked, and may include an electrode tab 270, an electrode lead 280, and a lead film 290. An electrolyte may be injected into the pouch-type battery case 210 in which the electrode assembly 260 has been accommodated, and then a terrace part 250 may be sealed to prepare the lithium secondary battery 200.

The pouch-type battery case 210 may accommodate the electrode assembly 260 therein. The pouch-type battery case 210 may be prepared by forming the pouch film laminate 100 previously described with reference to FIG. 1. Since detailed constitution and property of the pouch film laminate 100 are same as previously described, detailed description thereof is omitted.

In order to prepare the pouch-type battery case 210, the pouch film laminate may be drawing-formed and stretched by a punch, etc., thereby forming a cup part 240 including an accommodating space 241 in a pouch shape so that the electrode assembly 260 is accommodated therein.

As illustrated in FIG. 2, the pouch-type battery case 210 may include an upper case and a lower case. In an embodiment, the lower case may have a lower cup part 240 which is formed to include the accommodating space 241 capable of accommodating the electrode assembly 260, and the upper case may cover the accommodating space 241 from above to prevent the electrode assembly 260 from falling outside of the battery case 210. The upper and lower cases may be prepared such that one side of each is connected to each other, but an embodiment is not limited thereto, and the upper and lower cases may be prepared in various ways such as being prepared separately from each other. Accordingly, the sealing part may be formed on three sides, or formed on all four sides, and it may be possible to include the cup part only in the lower case.

The pouch-type battery case 210 may be sealed in a state where the electrode assembly 260 is accommodated, so that a part of the electrode lead 280, which is a terminal part, is exposed. In particular, when the electrode lead 280 is connected to the electrode tab 270 of the electrode assembly 260, and the lead film 290 is formed on one portion of the electrode lead 280, the electrode assembly 260 may be accommodated in the accommodating space 241 provided in the cup part 240 of the lower case, and the upper case may cover the accommodating space 241 from above. Next, the electrolyte may be injected into the accommodating space 241, and the terrace part 250, formed along the perimeters of the upper and lower cases, may be sealed. The electrolyte is to move lithium ions generated by electrochemical reaction of an electrode when a lithium secondary battery 200 is charged/discharged, and may include a non-aqueous organic electrolyte solution which is a mixture of a lithium salt and an organic solvent, or a polymer using a polymer electrolyte. Furthermore, the electrolyte may include a sulfide-based, an oxide-based, or a polymer-based solid electrolyte, and this solid electrolyte may have flexibility enabling easy deformation by external force.

The electrode assembly 260 may be formed by an electrode and a separator being alternately stacked. In particular, a slurry in which an electrode active material, a binder and/or a conductive material are mixed is applied onto a positive electrode current collector and a negative electrode current collector to prepare a positive electrode and a negative electrode, and the positive electrode and the negative electrode are stacked in respective sides of the separator to form the electrode assembly 260 in a certain shape. The electrode assembly 260 may be inserted in the pouch-type battery case 210 and is injected with the electrolyte, and then sealed by the pouch-type battery case 210. In an embodiment, the type of the electrode assembly 260 may include a stack type, a jelly roll type, a stack and folding type, etc., but the type is not limited thereto.

In an embodiment of the present invention, the electrode assembly 260 may include two types of electrodes which are the positive electrode and negative electrode, and a separator disposed between the electrodes in order to insulate the electrodes from each other. The positive electrode and the negative electrode may have a structure where an active material slurry is applied onto an electrode current collector in the form of a metal foil or metal mesh containing aluminum and copper, respectively. In general, the slurry may be formed by an active material in a particle form, an auxiliary conductor, a binder, and a conductive material being agitated with a solvent added. The solvent may be removed in the following process.

The electrode tab 270 may be connected to each of the positive electrode and the negative electrode of the electrode assembly 260, and may protrude from the electrode assembly 260 to the outside to serve as a movement path of electrons between the inside and outside of the electrode assembly 260. The electrode current collector of the electrode assembly 260 may include a portion applied with the electrode active material and an end portion not applied with the electrode active material that is a non-coated part. The electrode tab 270 may be formed by cutting the non-coated part, or formed by connecting a separate conductive member to the non-coated part through ultrasonic welding, etc. As illustrated in FIG. 3, the electrode tab 270 may protrude in different directions of the electrode assembly 260, but is not limited thereto, and may protrude in various directions, for example, protrude side by side in the same direction from one side.

The electrode lead 280 may supply electricity to the outside of the secondary battery 200. The electrode lead 280 may be connected to the electrode tab 270 of the electrode assembly 260 through spot welding, etc. At least a portion of the electrode lead 280 may be surrounded by an insulation part 290. In an embodiment, one end of the electrode lead 280 may be connected to the electrode tab 270, and the other end may protrude to the outside of the battery case 210. The electrode lead 280 may include a positive electrode lead 282 connected to one end of a positive electrode tab 272 and extending in a direction in which the positive electrode tab 272 protrudes, and a negative electrode lead 284 connected to one end of a negative electrode tab 274 and extending in a direction in which the negative electrode tab 374 protrudes.

The other end of each of the positive electrode lead 282 and the negative electrode lead 284 may protrude to the outside of the pouch-type battery case 210. Therefore, electricity generated inside the electrode assembly 260 may be supplied to the outside. In addition, since the positive electrode tab 272 and the negative electrode tab 274 protrude in different directions, the positive electrode lead 282 and the negative electrode lead 284 may also extend in different directions. In an embodiment, the positive electrode lead 282 and the negative electrode lead 284 may have different materials. That is, the positive electrode lead 282 may have an aluminum (Al) material same as that of the positive electrode current collector, and the negative electrode lead 284 may have a copper (Cu) material or a nickel (Ni)-coated copper material same as that of the negative electrode current collector. A portion of the electrode lead 280, protruding to the outside of the battery case 210, may become a terminal part which may be electrically connected to an external terminal.

### Positive Electrode

The positive electrode current collector may include a highly conductive metal, and the metal is not particularly limited as long as it is non-reactive in a voltage range of a battery while a positive electrode active material layer is easily adhered thereto. Examples of the positive electrode current collector may include stainless steel, aluminum, nickel, titanium, calcined carbon, or aluminum or stainless steel that is surface-treated with carbon, nickel, titanium, silver, etc. In addition, the positive electrode current collector may generally have a thickness of 3 µm to 500 µm, and microscopic irregularities may be formed on a surface of the current collector to improve adhesion of the positive electrode active material. For example, the positive electrode current collector may be used in various forms including a film, a sheet, a foil, a net, a porous body, a foam body, a non-woven fabric body, etc.

The positive electrode active material layer may include, selectively as needed, a conductive material and a binder, together with the positive electrode active material.

At this time, the positive electrode active material may be included in an amount of 80 wt% to 99 wt%, and more particularly, 90 wt% to 98 wt% on the basis of the total weight of the positive electrode active material layer.

The conductive material may be used to provide conductivity to an electrode, and any material may be used in the battery, without particular limitation, as long as it does not cause chemical changes and conducts electrons. Specific examples may be graphite such as natural graphite or artificial graphite; a carbon-based material including carbon black, acetylene black, ketjen black, channel black, furnace black, lamp black, thermal black, a carbon fiber, etc.; a powder or fiber of metal including copper, nickel, aluminum, silver, etc.; a conductive tube including carbon nanotube, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used. The conductive material may be included in an amount of 0.01 wt% to 10 wt%, preferably 0.1 wt% to 9 wt%, and more preferably 0.1 wt% to 5 wt% on the basis of the total weight of the positive electrode active material layer.

The binder serves to improve binding between the positive electrode active material particles and adhesion between the positive electrode active material and the current collector. Specific examples may be polyvinylidene fluoride (PVDF), a polyvinylidene fluoride-hexafluoropropylene copolymer (PVDF-co-HFP), polyvinylalcohol, polyacrylonitrile, polymethymethaxrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, polyacrylic acid, and a polymer in which hydrogen thereof is substituted with Li, Na, or Ca, or various copolymers thereof, and any one alone or a mixture of two or more thereof may be used. The binder may be included in an amount of 1 wt% to 30 wt%, preferably 1 wt% to 20 wt%, and more preferably 1 wt% to 10 wt% on the basis of the total weight of the positive electrode active material layer.

The positive electrode may be prepared according to a general preparation method of a positive electrode. In particular, the positive electrode active material, and selectively as needed, a binder, a conductive material, and a dispersant may be dissolved or dispersed in a solvent to prepare a positive electrode slurry composition, and the positive electrode slurry composition may be applied onto the positive electrode current collector, and then dried and pressed to prepare the positive electrode.

The solvent may be a solvent generally used in the relevant art, including dimethyl sulfoxide (DMSO), isopropyl alcohol, N-methylpyrrolidone (NMP), dimethyl formamide (DMF), acetone, water, or the like, and any one alone or a mixture of two or more thereof may be used. The amount of the solvent used is sufficient if it dissolves or disperses the positive electrode active material, the conductive material, the binder, and the dispersant therein in consideration of the thickness of the slurry to be applied and the manufacturing yield, and provides a viscosity that allows excellent thickness uniformity upon application for preparation of the positive electrode thereafter.

Also, in another method, casting of the positive electrode slurry composition may also be performed on a separate support, and a film separated from the support may then be laminated onto the positive electrode current collector to thereby prepare the positive electrode.

### Separator

The separator separates the negative electrode and the positive electrode and provides a movement path of lithium ions, any separator generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may also be used in order to secure heat resistance or mechanical strength, and may be selectively used in a single-layer or multi-layer structure.

### Electrolyte

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and the type is not limited thereto.

In particular, the electrolyte may include an organic solvent and a lithium salt.

Any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, or the like; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylenecarbonate (EC), propylene carbonate (PC), etc.; an alcohol-based solvent including ethylalcohol, isopropyl alcohol, etc.; nitriles including R-CN (where, R is a linear, branched, or cyclic C2 to 20 hydrocarbon group, and may include a double-bond aromatic ring or an ether bond), etc.; amides including dimethylformamide, etc.; dioxolanes including 1,3-dioxolane, etc.; or sulfolanes may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, negative ions of the lithium salt may be one or more selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 4.0 M, preferably 0.5 M to 3.0 M, and more preferably 1.0 M to 2.0 M. When the concentration of lithium salt falls within the above ranges, the electrolyte may have appropriate conductivity and viscosity, and therefore, excellent performance of the electrolyte may be exhibited, and lithium ions may move effectively.

In addition to the electrolyte components, at least one additive, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in order to improve lifetime characteristics of the battery, suppress the reduction in battery capacity, and improve discharge capacity of the battery. At this time, the additive may be included in the amount of 0.1 to 10.0 wt% on the basis of the total weight of the electrolyte.

### Negative Electrode

The negative electrode includes a negative electrode current collector, and a negative electrode active material layer positioned on the negative electrode current collector.

The negative electrode current collector is not particularly limited as long as it does not cause chemical changes to a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 µm to 500 µm, and like the positive electrode current collector, microscopic irregularities may be formed on a surface of the current collector to strengthen binding force of the negative electrode active material. For example, the current collector may be used in various forms including a film, a sheet, a foil, a net, a porous body, a foam body, a non-woven fabric body, etc.

The negative electrode active material layer includes, selectively, a binder and a conductive material, together with the negative electrode active material.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based compound capable of alloying with lithium including Si, Al, Sn, Pb, Zn, Bi, In, Mg, Ga, Cd, Si alloy, Sn alloy, or Al alloy, etc.; a metal oxide capable of doping or dedoping lithium such as SiOβ(0<β<2), SnO₂, vanadium oxide, and lithium vanadium oxide; or a composite containing the metal-based compound and the carbon-based material such as a Si-C composite or a Sn-C composite, and any one or a mixture of two or more thereof may be used. In addition, as the negative electrode active material, a metal lithium thin film may also be used. In addition, for the carbon material, low-crystalline carbon, high-crystalline carbon, and the like may be all used. Representative examples of the low-crystalline carbon include soft carbon and hard carbon, and representative examples of the high-crystalline carbon include amorphous, plate-shaped, flake-shaped, sphere-shaped, or fibrous natural graphite or artificial graphite, kish graphite, pyrolytic carbon, mesophase pitch based carbon fiber, meso-carbon microbeads, mesophase pitches, high-temperature calcined carbon such as petroleum or coal tar pitch derived cokes, and the like.

The negative electrode active material may be included in an amount of 80 wt% to 99 wt%, 82 wt% to 99 wt%, or 84 wt% to 99 wt% on the basis of the total weight of the negative electrode active material layer.

The binder is a component that helps binding between the conductive material, the active material, and the current collector, and generally is included in an amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

The conductive material may be a component that further improves conductivity of the negative electrode active material, and may be included in an amount of 1 wt% to 30 wt%, 1 wt% to 20 wt%, or 1 wt% to 10 wt% on the basis of the total weight of the negative electrode active material layer. The conductive material may not be particularly limited as long as it does not cause chemical changes in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon; metal powder including aluminum power, nickel powder, etc.; a conductive whisker including zinc oxide, potassium titanate, etc.; a conductive metal oxide including titanium oxide, etc.; a conductive material including a polyphenylene derivative, etc. may be used.

The negative electrode active material, and selectively, the binder and the conductive material are dissolved or dispersed in a solvent to prepare a negative electrode slurry composition, and the negative electrode slurry composition is applied onto the negative electrode current collector, and dried to prepare the negative electrode active material layer, or casting of the negative electrode slurry composition is performed on a separate support, and a film separated from the support is then laminated onto the negative electrode current collector to thereby prepare the negative electrode active material layer.

Since the lithium secondary battery, according to the present invention, stably exhibits excellent discharge capacity, output characteristics, and capacity retention rate, etc., it is useful in the field of mobile devices, such as a mobile phone, a laptop computer, and a digital camera, and in the field of electric vehicles such as a hybrid electric vehicle (HEV).

In particular, in order to use the battery for a longer period of time with a single charging of the battery, the battery is required to have high capacity, and for achieving the high capacity, large-area electrode technology is necessary. However, in a process of creating a large-area electrode, performance of the electrode may be reduced, and there is a risk of thermal propagation to another electrode due to thermal runaway in case of fire.

Accordingly, according to another embodiment of the present invention, a battery module including the lithium secondary battery in plurality, and a battery pack including the battery module in plurality are provided.

The battery module refers to a battery assembly where the lithium secondary batteries are grouped into a certain number to place in a frame in order to protect the lithium secondary batteries from external impact, heat, vibration, etc. The battery pack refers to a final form of a battery system to be fitted in an electric vehicle, etc.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

The battery module and battery pack, according to the present invention, may include the pouch-type battery case including the above-described film laminate, and may thus maximize safety against thermal propagation in the event of an actual fire, thereby achieving high capacity and large area of the battery.

Hereinafter, examples of the present invention will be described in detail so that those skilled in the art to which the present invention pertains may easily carry out the present invention. However, the present invention may be implemented in several different forms, and is not limited to the examples to be described herein.

### Examples 1 and 2 and Comparative Examples 1 and 2

### <Preparation of Pouch Film Laminate>

An aluminum alloy with a thickness of 80 µm as a gas barrier layer, a nylon film with a thickness of 25 µm as a stretching assist film, and a polyester-based resin film with a thickness of 25 µm as a surface protection film were sequentially laminated on one side of a polypropylene (PP) film with a thickness of 80 µm as a sealant layer to prepare a pouch film laminate.

At this time, polyester films, prepared using ethylene glycol and using a mixture of ethylene glycol and butylene glycol, and by applying a terephthalic acid (TPA) method that is a preparation method of polyethylene terephthalate by reaction between ethylene glycol and terephthalic acid, were each used for the polyester-based film.

The polyester resin film included in the pouch film laminate, according to each of Examples 1 and 2 and Comparative Examples 1 and 2, was dissolved in hexafluoro isopropanol (HFIP), using ¹H-NMR and ¹³C-NMR, the amount of structure derived from each monomer was measured, and the results, on the basis of 100 mol% of the terephthalic acid-derived structure, were listed on Table 1 below.

**[Table 1]**

| | Polyester-based resin (surface protection layer) | | |
|---|---|---|---|
| | Ethylene glycol (mol%) | Butylene glycol (mol%) | Terephthalic acid (mol%) |
| Example 1 | 83.5 | 15.3 | 100 |
| Example 2 | 88.5 | 10.5 | 100 |
| Comparative Example 1 | 95.4 | 0 | 100 |
| Comparative Example 2 | 79.5 | 18.6 | 100 |

### Experimental Example

### (1) Measurement of max forming depth

When the pouch film laminate prepared according to each of Examples 1 and 2 and Comparative Examples 1 and 2 was cut into 266 mm in width and 200 mm in height, then cold-forming was performed to form a cup part of 90 mm in width and 160 mm in height, the forming depth immediately before the pouch film laminate was broken was defined as a max forming depth (unit: mm). 15 pouch film laminates for each of Examples 1, 2, and Comparative Examples 1 and 2 were prepared, and the above experiment for measuring the max forming depth was conducted 15 times, and then the average value of the results was listed on Table 2 below.

### (2) Chemical Resistance Test

On a surface of the outermost layer of the prepared pouch film laminate according to each of Examples 1 and 2, and Comparative Examples 1 and 2, an electrolyte solution 0.1 g was applied, and then the applied surface was stored for one or more days in a chamber of 60 °C. Then, this was taken out again, and discoloration or changes in appearance were compared. This test was not for objective figures, but rather an observation made with naked eyes. The case of no change was marked with ∘, and the case of changes occurred was marked with x.

### (3) Heat Resistance Test

A heating pad was attached to a surface of the prepared pouch film laminate, according to each of Examples 1 and 2 and Comparative Examples 1 and 2, to apply heat of 230 °C, and then whether a surface protection film was deformed or not was checked. The case of no deformation was marked with o, and the case of deformation occurred was marked with ×.

**[Table 2]**

| | Max forming depth | Chemical resistance | Heat resistance |
|---|---|---|---|
| Example 1 | 13.5 | ○ | ○ |
| Example 2 | 12.5 | ○ | ○ |
| Comparative Example 1 | 10.0 | ○ | ○ |
| Comparative Example 2 | 14.0 | ○ | × |

Referring to Table 2, in Examples 1 and 2, it can be seen that chemical resistance and heat resistance were maintained while the max forming depth increased, compared to that of Comparative Example 1. However, in Comparative Example 2, the max forming depth increased, but there was a problem with the heat resistance. Through this, in case of applying a polyester-based resin, in which a terephthalic acid-derived structure and a butylene glycol-derived structure being appropriately included, to a substrate layer, it can be seen that chemical resistance and heat resistance, required for the substrate layer of the pouch film laminate, were maintained while formability of the pouch film laminate was improved.

### <Description of the Symbols>

100: Pouch film laminate
110: Substrate layer
112: Surface protection film
114: Stretching assist film
120: Gas Barrier layer
130: Sealant layer
200: Lithium secondary battery
210: Pouch-type battery case
240: Cup part
241: Accommodating space
242: Planarization part
243: Slope part
250: Terrace part
251: Sealing part
260: Electrode assembly
270: Electrode tab
280: Electrode lead
290: Lead film

## Claims

1. A pouch film laminate, comprising:
a substrate layer, a gas barrier layer, and a sealant layer laminated in sequence,
wherein the substrate layer comprises a polyester-based resin comprising an ethylene glycol-derived structure, a butylene glycol-derived structure, and a terephthalic acid-derived structure, and
a molar ratio of the ethylene glycol-derived structure: the butylene glycol-derived structure is 95:5 to 80:20.

2. The pouch film laminate of claim 1, wherein
the substrate layer comprises a surface protection layer and a stretching assist layer,
the surface protection layer comprises the polyester-based resin, and
the stretching assist layer comprises a polyamide-based resin.

3. The pouch film laminate of claim 2, wherein the surface protection layer has a thickness of 20 µm to 30 µm.

4. The pouch film laminate of claim 2, wherein a ratio of a total thickness of the pouch film laminate to a thickness of the surface protection layer is 5 to 10.

5. The pouch film laminate of claim 2, wherein the stretching assist layer has a thickness of 20 µm to 30 µm.

6. The pouch film laminate of claim 2, wherein a ratio of a thickness of the stretching assist layer to a thickness of the surface protection layer is 1.2 or less.

7. The pouch film laminate of claim 1, wherein the gas barrier layer has a thickness of 60 µm to 130 µm.

8. The pouch film laminate of claim 1, wherein the gas barrier layer has a thickness of 70 µm to 90 µm.

9. The pouch film laminate of claim 2, wherein a ratio of a thickness of the gas barrier layer to a thickness of the surface protection layer is 2.5 to 3.3.

10. The pouch film laminate of claim 1, wherein the pouch film laminate has a total thickness of 160 µm to 280 µm.

11. The pouch film laminate of claim 1, wherein the sealant layer comprises a second polymer including polypropylene (PP).

12. The pouch film laminate of claim 1, wherein the sealant layer comprises a first sealant layer, a second sealant layer, and a third sealant layer laminated in sequence.

13. The pouch film laminate of claim 1, wherein a molar ratio of the ethylene glycol-derived structure: the butylene glycol-derived structure is 1:0.100 to 1:0.220.

14. The pouch film laminate of claim 1, wherein the polyester-based resin comprises a condensation polymerization reaction product of a mixture of ethylene glycol and butylene glycol and one or more selected from the group consisting of dimethyl terephthalate and terephthalic acid.

15. The pouch film laminate of claim 1, wherein the gas barrier layer comprises one or more selected from the group consisting of aluminum, copper, stainless steel, nickel, titanium, and INVAR.

16. A pouch-type battery case, manufactured by drawing-forming the pouch film laminate of claim 1.

17. A pouch-type secondary battery, comprising:
the pouch-type battery case according to claim 16; and
an electrode assembly accommodated in the pouch-type battery case.
